# EUROPEAN PATENT APPLICATION

(11) **EP 4 597 430 A1**
(43) Date of publication of application: **06.08.2025**
(21) Application number: 24163697.6
(22) Date of filing: 14.03.2024
(51) Int. Cl.: G06T 7/90, G06T 7/00, H04N 23/84

(54) **METHOD FOR MEASURING AND ANALYZING LUMINANCE DISTRIBUTIONS**

(30) Priority: 30.01.2024 PL 44765024
(71) Applicant: "Prolight" Spólka z ograniczona Odpowiedzialnoscia, 05-800 Pruszków (PL)
(72) Inventor: SLOMINSKI, Sebastian, 05-800 Pruszków (PL); SOBASZEK, Magdalena, 05-800 Pruszków (PL)
(74) Representative: LDS Lazewski Depo & Partners

(57) **Abstract**

The method of measuring and analyzing luminance distributions uses an algorithm that continuously optimizes in a feedback loop recorded image for at least 2 different multi-colored light sources in such a way that differences recorded by equipment with spectral correction and differences recorded after converting the XYZ parameters into RGB parameters of a given camera, were below a set threshold, located within a single bit of the stored value of tristimulus/RGB components to obtain the highest possible color fidelity in XYZ system in order to keep the XYZ values within the distinguishability threshold, while not optimizing the RGB parameters for the camera, and the threshold of distinguishability is set at a level from 5% to 10% below the threshold of distinguishability of the luminance gradient and color for the human eye, and optimization is carried out to obtain the highest possible color fidelity in the RGB system to keep the RGB values within the bit resolution threshold for the recorded luminance span range, without optimizing the XYZ parameters for the needs of the human eye.

## Description

The subject of the invention is a method for measuring and analyzing luminance distributions.

Research shows that humans are able to distinguish from 400000 to several million colors, and the so-called the color difference threshold (chromatic threshold), understood as the smallest color difference expressed as a fraction of a wavelength, and distinguishable by the human eye, is tenths of a nanometer. If we were to simply compare the retina to a CCD detector, taking into account only cones (the human eye has about 126 million light-sensitive receptors, including about 120 million rods and about 6 million cones), it would be a matrix of 3000 x 2000 pixels. To maintain the ability to distinguish up to several million colors, it is necessary to encode 24 bits per pixel, which means the image memory complexity of 18 MB for one eye. It should be noted that color is not a property of objects, like their shape or mass. Identifying color and assessing it always requires taking into account three elements: the spectral distribution of the light source as the place where the radiation is created, the properties of the eye as the detector and the brain as the place where the impression is created. Quantitatively, color can be characterized by three attributes:
- hue (or colour) - gives a colour its name, and is determined by the relevant electromagnetic wavelength in the visible light spectral range from 380 to 780 nm;
- saturation - obtained by mixing colour radiation with a beam of white light; by varying the amount of white light we obtain the impression of the same colour but brightened or darkened,
- brightness (brilliance or luminance) - corresponds to the impression of a weaker or stronger beam of light that does not change colour or saturation.

The range of luminance variation characteristic of digital displays can be characterised as the quotient of the recorded luminance range of the colour image (mixed or RGB components) and the recordable dynamic range resulting from the ADCs. Typically, even images recorded at 14 or more bits per channel are down to 8 bits per channel. This is due to the ability to display the component colour mixtures (typically 3 x 8 bits for RGB). This gives only 256 levels of variation for each channel. Thus, if an image with a luminance range of, say, 10 - 100000 cd/m² is recorded at any given time, there is a luminance range of (100000 - 10) / 256 = 390.586 cd/m² for each bit. Therefore, for the case under consideration the range of variation within one bit cannot be less than 390.586 cd/m². Also, sensors for luminance and colour measurements differ from sensors for recording and matrices for displaying colour images in terms of spectral sensitivity characteristics. All light measurement devices have filters that change the spectral sensitivity curves of the sensors into the trichromatic spectral sensitivity curves of the human eye (X, Y, Z). Recording devices measure colours by using RGB filters having characteristics that are diametrically opposed to the human eye's XYZ sensitivity curves. Thus, when the human eye sees identical hues that have been obtained by mixing different spectral distributions (e.g. different LEDs or additive or subtractive mixing), recording devices (digital cameras) register these hues as different from each other. Spectrum-corrected recording devices register the same shades in the likeness of the human eye.

The issue of measuring luminance and colour to optimise focus has been the subject of many patents and scientific papers.

An optical system and a colour luminance meter and colorimeter using the same, known from U.S. patent No. US8982349B2, is based on a measuring probe in which the measuring light is split into two or more parts through a split optical system, and when each split light is received by a sensor receiving the light through an interference filter acting as a colour filter, the split light is introduced into the interference filter through a group of collecting lenses formed as a substantially bilateral telecentric system. The interference filter is formed in order to obtain a transmittance characteristic corresponding to the measurement parameter, depending on the condition of intensity distribution with respect to the incident angles of the light incident on the interference filter. Thus, the measuring probe according to the invention can reduce the influence of the deviation of the transmittance characteristics caused by the incident angles, even when using an interference filter.

A meter and a method of obtaining the meter are known from German patent no. DE112016002826T5, wherein in the disclosed meter the measured beam is divided by a bundle of fibres and the individual beams thus obtained are passed through a colour filter. The relative spectral sensitivity obtained from the individual colour filters approximates the relative standard spectral brightness sensitivity. The beams passing through the individual colour filters are captured by light-receiving sensors. The individual light-receiving sensors emit an electrical signal corresponding to the captured beams. A differentiating mechanism derives a brightness value corresponding to the spectral distribution of the measured beams from the multiple electrical signals obtained.

An optical device - spectroradiometer and colorimeter known from International patent application No. WO2022030292A1 includes: a photometric module; a first optical unit; a photometric module; and a second optical unit. The first optical unit includes: a first lens positioned closest to the side of the object and a first prism that deflects light from the first position and directs it to the first lens. The second optical unit includes: a second lens positioned closest to the side of the object and a second prism that deflects light from the second location and directs it to the second lens. The first optical axis of the first optical unit from the object of measurement to the first prism is substantially parallel to the second optical axis of the second optical unit from the object of measurement to the second prism and the distance between the first optical axis and the second optical axis is less than the distance between the centre of the first lens and the centre of the second lens.

A lamp test control system and lamp test method known from Chinese patent No. CN111693252B includes a top computer, a controller and a lamp, with the top computer being connected to the controller and the controller being connected to the lamp; the controller can control multiple chip channels corresponding to the lamp, the controller is equipped with a software control rod, and the control rod adjusts the data corresponding to each chip channel in real time to control the irradiation effect of the lamp. The lamp test control system and lamp test method provided by the invention are suitable for testing intelligent lamps such as LED lamps, are convenient to use, can update the chip channel data by the software control rod, accurately find the lamp test parameters corresponding to the optimum lamp irradiation effect, and effectively improve the lamp test efficiency.

A system for testing optical axis alignment of a camera module and a method for testing optical axis alignment of a camera module known from Korean patent No. KR101472853B1, includes an image storage unit that stores images captured by a plurality of lenses; a selection unit that selects one image from the images in the storage unit; and a centering evaluation unit that evaluates the centering state of the image based on the brightness of the selected image. Furthermore, the invention provides an evaluation method for aligning the optical axis of the camera module.

The purpose of the invention is to develop a system that optimizes the recorded image in such a way that the differences recorded by equipment with spectral correction (similar to the human eye) and the recorded differences (after converting the XYZ parameters into RGB parameters of a given camera or display) are below a set threshold - e.g. located within a single bit of the stored value of tristimulus/RGB components, or a set threshold, e.g. 5% or 10% (below the threshold of luminance and color gradient distinguishability for the human eye), with optimization taking place continuously in the feedback loop, in such a way that one of 3 optimization systems is used e.g. for 2 different multi-colored light sources or digital displays, i.e. a) optimization for obtaining the highest possible color fidelity in the XYZ system (least squares optimization) to maintain the values XYZ within the distinguishability threshold, without optimizing the RGB parameters for cameras or displays, b) optimization to obtain the highest possible color fidelity in the RGB system (least squares optimization) to keep the RGB values within the bit resolution threshold for the recorded luminance span range, without simultaneously optimizing the XYZ parameters for the needs of the human eye and c) optimizing the XYZ and RGB parameters simultaneously to obtain values below the distinguishability threshold and the bit resolution threshold for the recorded luminance span range, and if this is not possible at a given moment, keeping both parameters below the set threshold of mismatch error (e.g. 5 or 10%).

The method of measuring and analyzing luminance distributions according to the invention uses an algorithm that continuously optimizes in a feedback loop recorded image for at least 2 different multi-colored light sources in such a way that differences recorded by the equipment with spectral correction and differences recorded after converting XYZ parameters into RGB parameters of a given camera were below a set threshold, located within a single bit of the stored value of tristimulus/RGB components to obtain the highest possible color fidelity in the XYZ system in order to keep the XYZ values within distinguishability threshold, without optimizing the RGB parameters for the camera.

In a preferred embodiment, the distinguishability threshold is set at a level of 5% to 10% below the luminance and color gradient distinguishability threshold for the human eye.

In a preferred embodiment, the optimization is performed to obtain the highest possible color fidelity in the RGB system in order to keep the RGB values within the bit resolution threshold for the recorded luminance span range, without not optimizing the XYZ parameters for the needs of human eye.

In a preferred embodiment, the XYZ and RGB parameters are optimized in order to obtain values below the distinguishability threshold and the bit resolution threshold for the recorded luminance range, and if this is not possible at a given moment, to keep both parameters below the set mismatch error threshold.

In a preferred embodiment, the mismatch error is set at 5%.

In a preferred embodiment, the mismatch error is set at 10%.

### Drawing

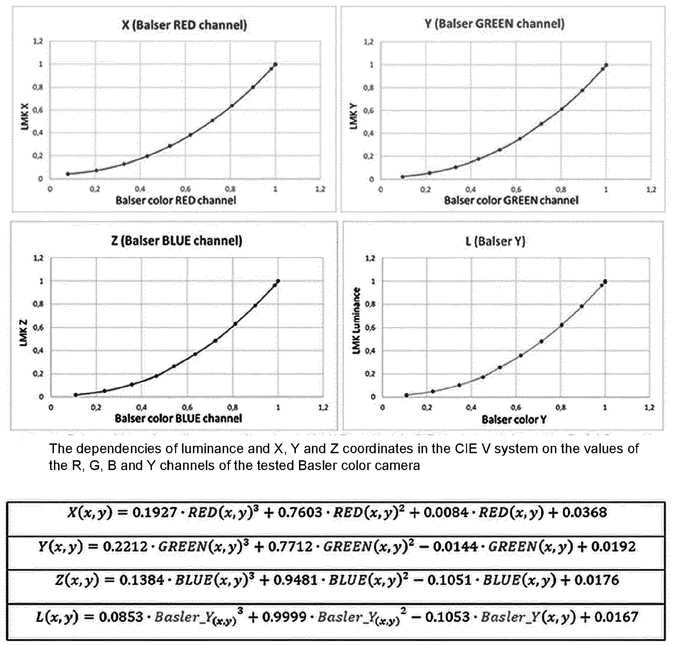

Fig. 1 shows the dependencies of luminance and X, Y and Z coordinates in the CIE V system on the values of the R, G, B and Y channels of the tested Basler color camera.

The subject of the invention is presented in an Example,

### Example

For an automated method of supporting the color setting mode, the algorithm optimizes the recorded differences after converting the XYZ parameters into RGB parameters of a given camera for a continuous image in the feedback loop so that they are below the set threshold. The relationship of color systems and conversion relationships are shown in the charts and table in Fig. 1.

## Claims

1. A method of measuring and analyzing luminance distributions, **characterized in that** it uses an algorithm that continuously optimizes in a feedback loop recorded image for at least 2 different multi-colored light sources in such a way that differences recorded by the equipment with spectral correction and recorded differences after converting XYZ parameters into RGB parameters of a given camera, were below a set threshold, located within a single bit of the stored value of tristimulus/RGB components to obtain the highest possible color fidelity in the XYZ system in order to keep the XYZ values within distinguishability threshold, without optimizing the RGB parameters for camera.

2. The method of measuring and analyzing luminance distributions according to claim 1, **characterized in that** the distinguishability threshold is set at a level from 5% to 10% below the luminance and color gradient distinguishability threshold for the human eye.

3. The method of measuring and analyzing luminance distributions according to claim 1, **characterized in that** the optimization is performed to obtain the highest possible color fidelity in the RGB system in order to keep the RGB values within the bit resolution threshold for the recorded luminance span range, without optimizing the XYZ parameters for the needs of human eye.

4. The method of measuring and analyzing luminance distributions according to claim. 1, **characterized in that** the optimization of the XYZ and RGB parameters is performed in order to obtain values below the distinguishability threshold and the bit resolution threshold for the recorded luminance span range, and if this is not possible at a moment, to keep both parameters below the set mismatch error threshold.

5. The method of measuring and analyzing luminance distributions according to claim 1, **characterized in that** the mismatch error is set at 5%.

6. The method of measuring and analyzing luminance distributions according to claim 1, **characterized in that** the mismatch error is set at 10%.
